# EUROPEAN PATENT SPECIFICATION

(11) **EP 0 598 039 B1**
(45) Date of publication and mention of the grant of the patent: **09.12.1998**
(21) Application number: 92917849.9
(22) Date of filing: 04.08.1992
(51) Int. Cl.: C08G 18/38, C08G 18/42, C08G 18/44, C08G 18/64

(54) **THERMALLY REVERSIBLE ISOCYANATE-BASED POLYMERS**
THERMISCH UMKEHRBARE POLYMERE AUF ISOCYANATBASIS
POLYMERES THERMIQUEMENT REVERSIBLES A BASE D'ISOCYANATE

(30) Priority: 05.08.1991 US 740335; 16.03.1992 US 851840
(43) Date of publication of application: 25.05.1994
(60) Divisional application: 98102619.8
(73) Proprietor: BATTELLE MEMORIAL INSTITUTE, Columbus Ohio 43201-2693 (US)
(72) Inventor: MARKLE, Richard, A., Columbus, OH 43221 (US); BRUSKY, Phyllis, L., Columbus, OH 43214 (US); CREMEANS, George, E., Groveport, OH 43125 (US); ELHARD, Joel, D., Hilliard, OH 43026 (US); BIGG, Donald, M., Columbus, OH 43235 (US); SOWELL, Sylvester, Columbus, OH 43219 (US)
(74) Representative: R.A. KUHNEN & P.A. WACKER
(86) International application number: US9206493
(87) International publication number: WO9303080

(56) References cited:
- EP-A- 0 164 638
- WO-A-91/11476
- DE-A- 2 023 697
- US-A- 3 503 927
- US-A- 4 841 009
- JOURNAL OF POLYMER SCIENCE vol. 17, no. 6, 1979, NEW YORK, USA pages 1619 -
- 1629 KURITA ET AL 'SYNTHESIS AND PROPERTIES OF POLYURETHANES DERIVED FROM BIS- N-HYDROXYIMIDES AND DIISOCYANATES'

## Description

### FIELD OF THE INVENTION

This invention relates generally to polymer compositions that are found by reacting isocyanate and labile-hydrogen functionality. More particularly the invention relates to thermally reversible polymer compositions that are capable of thermally dissociating into the reactant isocyanate and labile hydrogen functionality.

### BACKGROUND OF THE INVENTION

Organic polyisocyanates have been used as lacquers, films, coatings and hot-melt adhesives. Since isocyanate compounds are very reactive toward groups with an active hydrogen such as hydroxyl, carboxyl, amine and the like, it is common to control such reactivity by adding a mono-blocking or masking agent to the isocyanate (U.S. 3,115,479 to Windermuth et al.) and then reacting the blocked isocyanate with a polyester containing free hydroxyl groups by heating the mixture to deblock the isocyanate.

As seen in U.S. 2,777,881, it is possible to avoid the use of blocking agents by limiting the amount of isocyanate reacted with terminal labile hydrogen groups of a polyester or polyesteramide so as to afford a material that is in an uncured state. Additional isocyanate groups then are added to the uncured product so that a subsequent irreversible cross-linking reaction with moisture can take place to produce the final cured state with appropriate physical properties.

Another solution that avoids premature introduction of moisture into the product is to use a packaging system to protect the isocyanate from moisture prior to use. Adhesives Age, September 1987, p. 42-43.

U.S. 4,166,873 to Gilliam et al discloses improved hot melt adhesives and coatings formed by adding diisocyanate to polyesters. The inventors note that the incorporation of isocyanate into the polyester molecules does not involve chain-extension or significant cross-linking. U.S. 2,982,754 to Sheffer et al. and U.S. 2,876,725 to Buck at al. (example 4) contain additional examples of polyesters modified by the addition of isocyanates.

U.S. 3,503,927 to Chang et al pertains to a cross-linked network structure where the cross-linking is labile to heat and provided by the reaction between a phenolic group and an isocyanate group. U.S. 3,684,769 to Abbott et al. pertains to thermally reversible polyester or polyether urethane polymers with thermally reversible urethane links between polymer chains. U.S. 4,201,853 to Henry et al reveals a thermally-reversible polymeric binder for plastic bonded explosives that reversibly dissociated below 150°C. Wagener and Muria, Polymer Preprints, Vol. 30, No. 1, April 1989 disclose monomeric thermally reversible urethanes whose molecular weight is a function of temperature. Although a polyurethane was prepared, no discussion or data on polymer urethane bond reversibility are given nor are suggestions made as to its applicability.

U.S. 4,608,418 to Czerwinski et al. illustrates an attempt to improve the performance of conventional isocyanate materials by adding a reactive plasticizer to a hot-melt composition formed from a mixture of one or more polyisocyanates and one or more hydroxyl terminated polyols and one or more chain extenders.

Prior-art isocyanate-based polymers have been low molecular weight isocyanate compositions that afford good working properties, e.g., application ease, surface wettability and penetration, leveling ability, and gap-filling capacity. Such materials are commonly moisture-cured to form substituted polyureas after being applied to give durable coating or adhesive materials. However, such materials do not have the high performance characteristics of some of the more costly high-performance polymers such as the polyimides. Typically as one attempts to improve the performance characteristics of the isocyanate-based materials using conventional techniques, high-viscosity and associated low wettability result in a loss of substrate bonding ability. Currently conventional isocyanate polymers do not allow for the high temperature processing, e.g., soldering and thermoforming, of flexible circuit boards and other components such as chips, transformers and motors. Conventional isocyanate polymers typically do not provide cracking resistance at high end-use operating temperatures such as found in high performance aircraft, automotive and computer equipment. The processibility of high performance materials that are used in high performance protective dielectric film or coating materials is more limited than desired. A need continues to exist for a better, melt-processible, high-performance materials for molding and coating applications, especially finish surface coatings on composite materials.

WO 91/11476, which is not prepublished, relates to thermally reversible polymer compositions capable of dissociating into its constituants. However, said reference does not disclose to avoid gel formation. So it was not predictable to obtain a high gloss finish.

### SUMMARY OF THE INVENTION

Object of the present invention is a stable, melt-processable, polymer composition comprising a compound with labile-hydrogen functionality and a compound with isocyanate functionality wherein said labile-hydrogen compound and said isocyanate compound are linked by a thermally-reversible, isocyanate-labile hydrogen linkage that has the characteristic of dissociating into said labile-hydrogen compound and said isocyanate compound as a melt and wherein said labile hydrogen or sad isocyanate compound contains a polyarylenesulfide, excluding polyphenylenesulfide, having phenolic hydroxyl end groups, or a polyarylimidazolidine having phenolic hydroxyl end groups wherein said polyarylenesulfide is biphenylenesulfide or a polyarylsulfide in which the aryl group is represented by anthracene or anthraguinone, or any other C₆ - C₁₄ groups having liquid crystal character, phenolic hydroxyl end groups, and a degree of polymerization of 1 to 20; said polyarylimidazolidine is: 4-imino-1,3-imidazolidine-2,5-dione-1,3-diyl, 5-imino-1,3-imidazolidine-2,4-dione-1,3-diyl, 1,3-imidazolidine-2,4,5-trione-1,3-diyl, or mixtures thereof with said polyarylimidazolidine having phenolic hydroxyl end groups and a degree of polymerization of 1 to 20.

The present invention further discloses and claims a process for preparing polyarylimidazolidine with hydroxyl end-capping groups and a degree of polymerization of 1 to 20 comprising:
a) mixing an excess of hydrogen cyanide with an aryl diisocyanate and a catalyst in a nonaqueous solvent to afford an exothermic reaction;
b) adding a stoichiometric amount of said aryl diisocyanate to react with said excess hydrogen cyanide and one hydroxyl of a dihydroxyl end-capping group after the exothermic reaction has cooled slightly; and
c) adding immediately thereafter said dihydroxyl end-capping group.

Preferred embodiments of the present inventions are claimed in the subclaims. This invention solves many of the problems of the state of the art as discussed above by preparing thermally-reversible polymer compositions that contain isocyanate-labile-hydrogen based linkages in the polymer backbone and, if necessary, a controlled number of similar crosslinking groups. These isocyanate-labile hydrogen based linkages provide cured, crosslinked, three-dimensional polymer networks that are insoluble, strong solids, at room temperature, but which become soluble, free-flowing melts at elevated temperatures. The polymers become soluble and fusible due to a thermally reversible dissociation of the isocyanate-labile hydrogen based linkage to the isocyanate and labile-hydrogen starting groups at an elevated temperature.

The isocyanate-labile hydrogen based linkage is a urethane linkage when isocyanate functionality reacts with a terminal hydroxyl functionality. A substituted urea linkage is formed when the labile hydrogen functionality is a terminal amine functionality. Other labile-hydrogen functionalities form an isocyanate adduct of the functionality. Labile-hydrogen functionalities include, but are not limited to, amides, alcohols (including phenols), amines, oximes, triazoles, imidazoles, imidazolines and iminodiazolidinediones.

Generally both aromatic and aliphatic isocyanate and labile-hydrogen functionality form urethane or other bonds that are reversible at some elevated temperature. Typically this temperature is significantly higher for the aliphatic product than for the aromatic product. Intermediate reversing temperatures can be achieved by using a mixed aliphatic and aromatic product. When high performance polymers are desired, an oligomer such as an aromatic polyester with liquid crystal character, a polycarbonate, a polyarylsulfide, a polyimide, a polyarylimidazolidine including poly(parabanic) acid, a polyarylsulfone or equivalent high-performance functionalty is incorporated into the isocyanate or labile-hydrogen compounds.

As used here the term oligomer or prepolymer is defined as a low molecular weight compound capable of further polymerization. When used in terms of high-performance functionality (e.g., aromatic polyester with liquid crystal character, aromatic polycarbonate, polyarylsulfide, aromatic polyimide, polyarylimidazolidine including poly(parabanic) acid, polyarylsulfone and so forth), the term oligomer typically includes about 1 to 20 repeat units of such high performance functionality. For the case of a single repeat unit, the single repeat unit has at least two functional groups that are the same. For example, the condensation of a diacid with two hydroxy groups to produce two polyester units would be considered as an oligomer with a single repeat unit. As used here, the term prepolymer typically refers to commercially available isocyanate and labile hydrogen compounds while oligomers are usually prepared. However this distinction is not limiting and serves only as a convenient way of categorizing the materials used in practicing this invention.

Often it is desirable to block the isocyanate functionality prior to its reaction with the labile hydrogen functionality so as to prevent unwanted irreversible reactions with moisture and other reactive hydrogen contaminants. As a result, improved handling and stability of the isocyanate functionality is obtained. By using a volatile blocking agent such as phenol, the blocked isocyanate can be reacted with the labile hydrogen functionality by heating the two reactants so as unblock the isocyanate by vaporizing the phenol leaving the unblocked isocyanate to react with the labile hydrogen functionality.

By controlling the stoichiometry of the reactant labile-hydrogen functionality and the isocyanate functionality, it is possible to obtain a polymer with isocyanate end groups. By using a nonvolatile blocking group in the correct stoichiometry, it is possible to control the reactivity and characteristics of the final polymer product. Provided there are no interfering reactions with the nonvolatile blocking group, it may be added at any stage of the reaction sequence.

Various characteristics may be incorporated into the polymer composition by using oligomers with specific properties. For example, aromatic polycarbonates may be used to provide inherent toughness and impact resistance. Moreover, it has been found that a thermally-reversible polymer composition with polycarbonate forms a class "A" finish surface, i.e., suitable for exterior finish applications such as automotive finishes, when applied to polypropylene and polyethylene terephthalate sheet composites. Furthermore the thermally-reversible polymer adheres tightly to the composites, a characteristic not previously known.

By controlling the degree of polymerization of an aromatic polyester oligomer, a melt liquid crystal property can be obtained. Such a liquid crystal property provides solid state anchoring or "virtual crosslinks" so as to minimize the number of actual three dimensional covalent crosslinks that need to be used. Polyimides are used to provide high melting and liquid crystal features.

Polyphenylenesulfides have exceptional strength and rigid, heat stable polymer chains that provide improved hardness, toughness, and solvent resistance to the polymer composition. Although hydroxyl end groups are preferably used as the active or labile-hydrogen end groups, other end groups such as amines, oximes, triazoles, imidazoles and imidazolines may also be used. By combining an aryldihalide and sodium sulfide nonahydrate in a non-aqueous solvent such as 1-methyl-2-pyrrolidinone and driving off the water of hydration, a polyarylsulfide oligomer is formed without the explosive and unstable conditions that arise when sodium sulfide are used.

A polyarylimidazolidine oligomer may be used to afford high temperature termal stability. By using an initial excess of cyanide to isocyanate, gel formation is avoided in preparing the polyarylimidazolidine oligomers that have about 1 to 20 repeat units with 3 to 10 repeat units preferred.

To provide ambient or low temperature flexibility and toughness, flexible aliphatic polyester, polyether or polycarbonate prepolymers can be included in the polymer composition. For example, polyesters formed from adipic or sebacic acid, dimmer acids, α,ω-butane, pentane or hexane diols, hydrogenated (saturated) phthalic acids, other simple diols and polyglycols such as polypropylene glycols can be used.

Melt reversibility is enhanced by incorporating ionic functionality into the polymer composition that is capable of forming thermally-reversible ionic bonds. Typically such thermally-reversible ionic functionality can be achieved by using a functionality such as an aliphatic carboxylate, sulfonate, or phosphonate that is capable of forming ionic bonds with preferably a multivalent cation such as zinc, magnesium, calcium or nickel.

### BRIEF DESCRIPTION OF THE DRAWINGS

FIGS. 1 (a) and 1 (b) show the liquid crystalline region of the bis-hydroquinone ester of isophthalic acid (Example 4) at 211°C. Plane polarized optical micrographs (400X) obtained with Mettler FP2 hot stage and Olympus BH microscope with 40X ULWD (ultralong working distance) lens.

FIGS. 2 (a) and 2 (b) show the liquid crystalline region of the phenolic-hydroxyl terminated biphenylene sulfide oligomer (Example 7) at ~200°C. Plane polarized optical micrographs (400X) obtained with Mettler FP2 hot stage and Olympus BH microscope with 40X ULWD (ultralong working distance) lens.

In describing the preferred embodiment of the invention which is illustrated in the drawings, specific terminology is resorted to for the sake of clarity. However, it is not intended that the invention be limited to the specific terms so selected and it is to be understood that each specific term includes all technical equivalents that operate in a similar manner to accomplish a similar purpose.

Although a preferred embodiment of the invention has been herein described, it is understood that various changes and modifications in the illustrated and described structure can be affected without departure from the basic principles that underlie the invention. Changes and modifications of this type are therefore deemed to be circumscribed by the spirit and scope of the invention, except as the same may be necessarily modified by the appended claims or reasonable equivalents thereof.

### DETAILED DESCRIPTION OF THE INVENTION AND BEST MODE FOR CARRYING OUT THE PREFERRED EMBODIMENT

The benefits and potential benefits of the thermally-reversible polymer composition arise from the basic property of this invention, that is, the ability of the polymer composition to thermally dissociate into its reactant isocyanate and labile-hydrogen functionalities. This basic property allows the composition to flow at a comparatively low temperature while exhibiting high strength, good surface adhesion, low temperature flexibility, relatively fast development of strength, relatively good solvent resistance, good tear resistance, good impact resistance, and high abrasion resistance.

Generally the formation of the compositions of this invention requires reacting high performance oligomers possessing appropriate reactive end groups, i.e., isocyanate and labile-hydrogen functionality capable of forming a isocyanate-labile hydrogen based linkage that is capable of thermal dissociation into the starting materials. Essentially stoichiometric amounts of isocyanate and labile-hydrogen functionality are used.

Two types of structures are prepared. One consists of linear isocyanate-labile hydrogen based linkage in which no trifunctional isocyanates (or labilehydrogens) are used. Such polymeric compositions have "virtual crosslinks," i.e., crystalline aggregates that act like crosslink sites, based on liquid crystal oligomers. The second type of polymeric composition is a crosslinked isocyanate-labile hydrogen based linkage based on a combination of a diisocyanate-labile hydrogen linear linkage and preferably a component of triisocyanate or a tris-labile hydrogen or both. Both types of structures may also contain ionic functionality capable of forming thermally-reversible ionic bonds.

The thermally-reversible polymer compositions may also be considered as having three building blocks: 1) an isocyanate linking group, 2) a high performance aromatic oligomer backbone group, and 3) a toughening aliphatic prepolymer backbone group.

The isocyanate linking group includes the trifunctional isocyanate crosslinker that is preferably reacted only with the aromatic oligomer backbone group. Various balanced stoichiometry combinations of these three sequences can be combined to produce thermally-reversible polymer compositions that are crosslinked to a controlled extent with aromatic isocyanate-labile hydrogen linkages, or are not covalently crosslinked, but depend on "virtual" crystalline polymer crosslinks for high performance.

Although phenolic hydroxyl is preferably used as the labile-hydrogen functionality, it is noted that other moieties also furnish labile-hydrogen functionality. Such moieties include, but are not limited to, aromatic amines or diamines, aromatic oximes and bis-, bi-, or dioximes, aromatic triazoles and bis- or ditriazoles, and aromatic imidazoles and imidazolines and bis- or diimidazoles and imidazolines. Less preferred are the aliphatic analogs of these compounds and primary amines where excessive cross linking may be undesirable.

Polyisocyanate reactants used in this invention include aromatic, aliphatic, cycloaliphatic or aralkyl polyisocyanates containing from about 6 to 100 carbon atoms. When a linear composition is sought, the polyisocyanate functionality should be about 2. The following polyisocyanates are expected to be useful: 1) aromatic isocyanates and prepolymers based on the following materials: 4,4'-diphenyl methane diisocyanate (MDI), 4,4',4"-triphenyl methane triisocyanate, 1,4-phenylene, diisocyanate (DPDI), 1,3-phenylene diisocyanate, xylene diisocyanates such as 5,6-dimethyl-1,3-phenylenediisocyanate and 2,4-dimethyl-1,3-phenylenediisocyanate and other aromatic isocyanates based on other backbones such as naphthalene and 2) aliphatic isocyanates and prepolymers based on the following representative materials: 1,3-cyclohexylene diisocyanate, 4,4'-methylene-bis(cyclohexylisocyanate). A wide variety of polyisocyanates are known in the art as shown in, for example, U.S. 4,608,418 to Czerwinski et al., which is hereby incorporated herein by reference.

The high-performance oligomer backbone group includes, but is not limited to, polyarylimidazolidines (including polyparabanic acids), and polyarylenesulfides with phenolic hydroxyl or other labile-hydrogen end-group functionalities. Generally a labile-hydrogen functionality of about two is preferred.

When thermoplastic sheet composite parts are formed in a mold, dimensional changes between the fiber or other reinforcements and the polymer causes surface roughness. As such the composite is not of class "A" surface finish quality, that is, the composite is not suitable for exterior finish applications such as automotive finishes. To remedy. this problem, coatings are used to fill in the depressions in the composite. The coatings must have low viscosity, good adhesion to the composite, and not solidify in an uneven manner. Prior to the present invention, no coatings were known that gave good adhesion to polypropylene and polyethylene terephthalate thermoplastic sheet composites. However, the thermally-reversible polymers of this invention adhere tightly to the composite and have a low viscosity that provides good coverage over the molded part.

Polyarylimidazolidines containing imidazolidine moieties such as 4-imino-1,3-imidazolidine-2,5-dione-1,3-diyl; 5-imino-1,3-imidazolidine-2,4-dione-1,3-diyl; 1,3-imidazolidine-2,4,5-trione-1,3-diyl; and mixtures thereof and their preparation are described in U.S. 3,591,562 and 3,933,758 to Patton which are hereby incorporated herein by reference. Isocyanates based on p-phenylenediisocyanate, MDI, and the other isocyanates listed above and in the Patton patents are reacted in a nonaqueous (anhydrous) solvent with hydrogen cyanide including hydrogen cyanide providers such as acetone cyanohydrin, using a suitable catalyst such as cyanide ion from a cyanide salt, preferably an alkali metal cyanide such as sodium cyanide and a tertiary amine without reactive hydrogen such as triethylamine and an excess of isocyanate to provide first stage isocyanate-terminated oligomers of a controlled degree of polymerization (DP). Any solvent that dissolves the reactants, the products, or both may be used. Anhydrous solvents are required since water reacts with the isocyanate group. Preferably the solvent is an aprotic dipolar solvent such as 1-methyl-2-pyrrolidinone suitably dried such as with a molecular sieves. The isocyanate terminated oligomer can then be blocked with phenol or reacted with any of a number of phenolic hydroxyl terminated oligomers.

To avoid undue cross-linking between the imino hydrogen and isocyanate with resultant gel formation, it has been found desirable to initially use an excess of hydrogen cyanide to isocyanate. After the initial exothermic reaction begins to cool, a stoichiometric amount of isocyanate sufficient to react with the excess of hydrogen cyanide and one hydroxyl group of a dihydroxyl end capping group is added to the reaction followed immediately by the addition of the dihydroxyl end capping group. The iminoimidazolidinedione ring(s) in the blocked or reacted oligomer can be hydrolyzed under appropriate conditions with a properly, water-diluted, mineral acid such as sulfuric acid or hydrochloric acid to provide the parabanic acid ring oxygen, i.e., 1,3-imidazolidine-2,4,5-trione, and the ammonium salt of the mineral acid. Generally the polyarylimidazolidines have a degree of polymerization (DP) of about one to about twenty with a lower DP of about four preferred for better product melt processability.

Illustrative polyarylsulfide oligomers suitable for the practice of this invention can be prepared by the condensation of dihaloaryl compounds with sodium sulfide. Labile-hydrogen functionality such as found in halophenolic compounds are used to control the molecular weight of the oligomer and to provide hydroxyl (labile-hydrogen) end capping groups. Sodium sulfide nonahydrate is preferred to sodium sulfide since the latter is unstable and can explode upon percussion or rapid heating. By generating the sodium sulfide in situ and driving off the waters of hydration, the reaction can be safely conducted in an open system, and the reaction progress followed by monitoring the volatile byproducts.

Examples of useful polyarylsulfides include those containing any C₆-C₁₄ group such as, but not limited to, biphenyl, phenyl ether, anthracene, or anthraquinone and contain pendant hydroxyl functionality. Biphenyl backbone groups are preferred, not only because they may be readily incorporated synthetically, but because even low molecular weight para-hydrocarbon disubstituted biphenyl compounds show liquid crystal properties. Polyarylsulfides that exhibit liquid crystalline behavior are preferred, since they possess better melt-processing characteristics (lower viscosity and high shear thinning) relative to comparable non-liquid crystalline materials.

Both lower cost dichloro- and higher reactivity dibromoaryl compounds can be used. Representative examples of haloaryl compounds include 4,4'-dibromobiphenyl; 1,5-dichloroanthraquinone; 4-bromophenyl ether; 9,10-dibromoanthracene; 2,4 dibromophenol while 4-bromochlorophenol can serve as halophenolic end cappers. Non-aqueous solvents capable of dissolving the product are used with the preferred reaction solvent being 1-methyl-2-pyrrolidinone due to its solvency strength, relatively high boiling point and miscibility with product precipitation media such as water, methanol or mixtures thereof.

Toughening prepolymers provide ambient or low temperature flexibility and toughness to the final polymer composition. A wide variety of flexible prepolymer materials may be used including polycaprolactone diols such as Union Carbide PCP, polytetramethylene ether glycols such as DuPont Teracol and polyaliphatic carbonate diols such as PPG Duracarb. Other toughening prepolymers include hydroxy-ended aliphatic polyesters such as adipic acid or sebacic acid polyesters with α,ω,-butane, pentane or hexane diols, saturated phthalic acid-based polyesters (long, or non-drying alkyds) with any of the simple diols and simple polyether glycols such as polypropylene glycols.

Additives as are commonly added to polyurethane products such as antioxidants, UV stabilizers, colorants, fillers, etc., can be added to the polymer composition of the present invention in conventional amounts.

The polymer composition of this invention can be coated onto a suitable substrate by applying such composition to the substrate and then heating the covered substrate to a temperature sufficient to form a bond. Operative methods for covering a surface include powder coating and applying a film to the substrate. In powder coating, the composition is ground into a powder with particle sizes less than about 250µm (microns) and applied to a substrate either by electrostatic spray or by fluidized bed. The covered substrate then can be baked at a temperature sufficient to form a uniform fused coating bonded to the substrate. In another method, a film of the polymer material can be placed on the substrate and then baked. Alternatively, the thermally reversible material can be applied to a heated substrate such that bonding occurs as the material is applied to the substrate. When used as a hot melt adhesive, the polymer composition can be applied between two substrates and the two substrates heated to form a bond. Alternatively the polymer composition can be applied to at least one heated substrate followed by pressing the second substrate to the first. When thermal conductivity is not a significant factor, the heated polymer components can be applied without substrate heating.

One of the objects of this invention was to prepare polyurethane polymer compositions based on aromatic diisocyanates that provide a good balance of easy melt processibility, especially at higher temperatures where aromatic urethane bond reversibility occurs, and excellent physical properties over a broad temperature range. For example, it was desired to obtain good adhesive strength at temperatures of 120-150°C or higher. Aromatic ester and polycarbonate diol oligomers that melt at temperatures ≥180°C and have the potential to provide such properties have been designed and synthesized.

To further moderate flexibility and toughness, especially at low temperature, low melting aliphatic polyester polyols were utilized. Finally crosslinking was introduced by selective incorporation of aromatic triisocyanates or aliphatic triols. The latter would function by providing internal aromatic triisocyanate production. The aromatic urethane crosslinks were designed to provide enhanced strength, resistance to creep under stress and solvent/chemical resistance. Yet at elevated temperatures, these bonds reverse allowing the composition to be more readily melt processed. Overall compositions with relatively low melt viscosity at high temperature (e.g., 50-1,000 Pa.s (500-10,000 poise) at 200°C) and excellent or superior strength, toughness and solvent resistance at lower temperatures (from about -40°C to about 120°C) are provided.

These polymers are useful as hot melt adhesives, coatings, melt processible polymers for part fabrication (injection, transfer, other thermoplastic processes), composite fabrication by melt impregnation, prepregging followed by thermal forming, pultrusion, and so on.

Adhesive component materials and their equivalent weights are listed in Table 2 Adhesive samples were hand mixed by adding the polyol components to a 180cc electrolytic (deep) beaker and melting/stirring under an argon flush using a Wood's metal bath set at 180 to 220°C (Table 3). The preparation of composition C (Example 9) is described as an example for all preparations. The melt mixing was done at -180°C when no polycarbonate oligomer (Example 2 , degree of polymerization (DP9), bisphenol A/phosgene oligomer with phenol end groups) was used. However, the mix had to be heated to -210°C to comelt the polycarbonate oligomer. A stainless steel spatula was used. Once comelted, all the polyol mixtures were clear, easily stirred melts.

The resulting melts were then cooled to about 100°C and the isocyanate components added, then the mixture heated to higher temperatures, e.g., 150-210°C as needed, to provide a melt with acceptable viscosity. The amount of isocyanate was adjusted so that the equivalents of OH and NCO groups were essentially equal in each case. Hence high molecular weight mixed aliphatic-aromatic polyurethanes were formed on completion of reaction between the OH and NCO groups. An end capper (p-phenyl phenol) that is relatively nonvolatile (b.p. >300°C) was added in the range of 0.1 to 0.05 equivalents to limit linear polyurethane molecular weight to ~100,000±50,000 and provide stabilized, nonfunctional polymer chain ends.

In some cases (Compositions A-E; Table 3), only linear polymers were expected since only difunctional polymer building units were used. In the remaining compositions (F-K), trifunctional aromatic isocyanates (CB75) or a triol (TMP) that results in in-situ aromatic triisocyanate formation were used. Hence these compositions are crosslinked below their melting points. Therefore the actual molecular weights depend on the purity and the degree of difunctionality of the difunctional components, the extent of end capping by p-phenyl phenol, the degree of crosslinking, and the degree of dissociation (or reversal) of the urethane bonds. The last two factors depend greatly on the temperature.

The thermal transitions for the compositions were determined by differential scanning calorimetry (DSC). These data are listed in Table 4. All the compositions have a second order (glass) transition temperature at ~44-49°C. They show very broad melting transitions starting at temperatures ranging from as low as about 135°C to about 181°C They all show complete melting between about 192°C and 227°C.

The compositions containing crosslinkers (samples F-K) show a moderate shift upward in initial melting point (~10-25°C). When a tin catalyst (dibutyl tin dilaurate, 0.1 weight percent) is added to a composition, a further modest increase in initial melting point (-30 degrees, composition H-b vs H-a) is observed. Clearly the compositions containing crosslinking groups are thermally reversed to the noncrosslinked state above their melting temperatures.

At ambient temperature, compositions A-E are readily soluble in N-methyl pyrrolidone (NMP). Composition F (1 equivalent percent isocyanate crosslinker) showed very slight evidence of crosslinking (very small amount of highly swollen gel in NMP). Compositions G-K (-10 equivalent percent isocyanate crosslinking groups) did not dissolve in NMP. Rather a slightly to moderately swollen gel was observed in NMP. Hence these compositions are rather thoroughly crosslinked at this temperature. The gels swelled considerably more upon heating to 100°C but still did not dissolve. At ~120-130°C, the gels began to break up and solubilize.

The dynamic (oscillatory) rheologic response of selected compositions was determined using the Rheometrics Dynamic Mechanical Spectrometer RMS 605 at a shear rate of 1 Hz/sec. The dynamic viscosity (R) or η* [Pa.s] (poise), the loss shear modulus G" [g/cm²] (dyne/cm²) and the storage modulus G' [g/cm²] (dyne/cm²) were determined as a function of temperature. The viscosity and storage shear modulus should be greater than about 10⁶ for useful physical strength to be observed. The viscosity should be less than about 1000 Pa.s (10,000 poise) for reasonable melt processibility. Hot melt adhesive application is best in the 0.5-50 Pa.s (5-500 poise) range. The most desirable viscosity will depend on several factors including, but not limited to, the method of hot melt application, the nature of the surfaces to be bonded, and their temperatures.

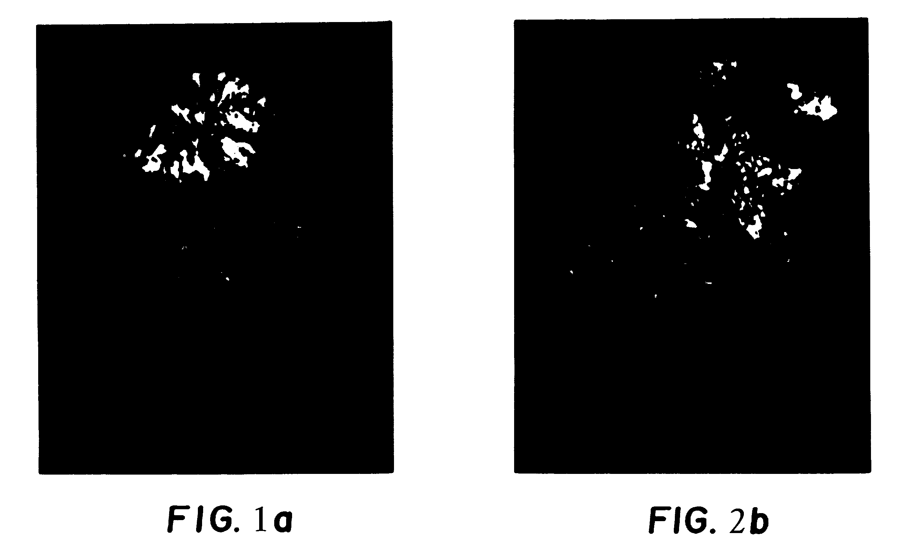

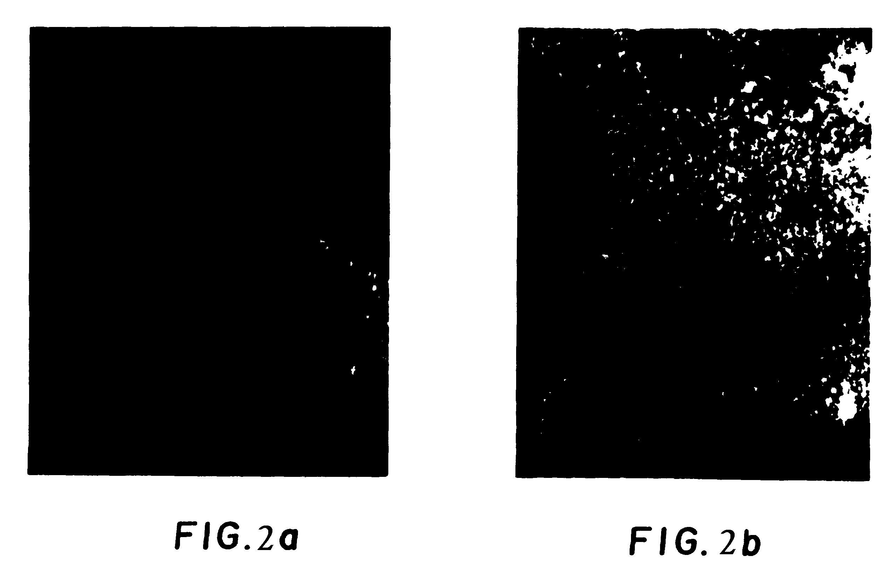

Composition H (actually H-a) and its replicate (J) exhibit these characteristics well and show excellent adhesive properties (described below). The rheometrics curves for H-a (FIG. 2) and H-b (FIG. 3; with a tin catalyst) were measured after about 10 minutes mixing at about 200-210°C. Composition J (H-a replicate) was measured after mixing 25 and 75 minutes at 220°C. The rheometric plots are shown in FIGS. 1-5.

The compositions represented by H-a and J had a viscosity of about 200 Pa.s (2000 poise) at 180°C and 9 Pa.s (90 poise) at 200°C after 15 minutes (FIG. 2). This increased to about 1000 Pa.s (10,000 poise) at 200°C (10 Pa.s; 100 poise at 220°C) after 25 minutes (FIG. 4). It was measured as 800 Pa.s (8,000 poise) at 200°C (9 Pa.s; 90 poise at 220°C) after 75 minutes (FIG. 5). Hence it was essentially unchanged between 25 and 75 minutes. Composition H-b showed greater viscosity at 10-15 minutes than H-a but less than J at 25 minutes. The shape of the curve indicates that the tin catalyst serves to speed up the thermal process but not change it. It is believed that the leveling off of the dynamic rheological parameter between 25-75 minutes indicates that equilibrium molecular weight for 210-220°C is reached and maintained. Hence a reproducible viscosity processing characteristic composition is obtained during this period.

Composition H-a was also measured by dynamic oscillatory mechanical spectrometry from -50°C to 100°C (FIG. 1) as well as from 100°C to 200°C (FIG. 2). The storage shear modulus (G") decreased rather sharply (from ~3x10⁵ to 1x10⁵ g/cm² (~3x10⁸ to 1x10⁸ dyne/cm²)) over the temperature range from about -15°C to about 3°C (transition range, centered at about 6°C). It then decreased quite slowly (semi-plateaued) to about 60°C. It then showed a sharper decrease or transition (from about 5 x 10⁴ (5x10⁷) to about 1.5 x 10³ g/cm² (1.5x10⁶ dyne/cm²)) over the 60-80°C range. It then decreased slowly again (semi-plateaued) from about 1.5 x 10³ (1.5x10⁶) to 4 x 10² g/cm² (4x10⁵ dyne/cm²)) over the temperature range from about 80°C to about 130-140°C. It then began to decrease more rapidly to a very low value or near zero by 200°C.

The behavior of both the storage and the loss shear modulus from -50 to 60°C is indicative of a very tough, resilient composition. Values in the range of 10⁸-10⁹ dyne/cm² for the storage shear modulus are considered very good for mechanical performance (e.g. an adhesive under load), especially in resistance to cracking during thermal cycling or under high strain rate loading. This is especially important over this lower temperature range. This is believed to be related to either the covalent urethane crosslinking or to the polycarbonate component, or to a combination of these factors. The transition at about 60°C may be related to a softening temperature of the polycaprolactone component. The second, more rapid, decrease in storage shear modulus, from 130-140°C to 200°C appears to be related to the reversal of the aromatic urethane bonds, especially those forming the crosslinked network.

The storage shear modulus values for composition J, after 25 minutes and 75 minutes of heating at 200-210°C (FIGS. 4 and 5) show a second plateau from 100 to 140°C much better, and at somewhat higher level (~7-5x10³ g/cm²; ~7-5x10⁶ dyne/cm²) than is seen in composition H-a (FIG. 1). These data indicate some additional reaction, i.e. urethane bond formation, may have occurred upon further heating. They more clearly indicate possible urethane bond reversal, in particular the crosslinking bonds, above about 140°C.

The tensile lap shear strengths for the compositions are given in Table 5. The compositions based on the aromatic polyester oligomer HQ/IPA/HQ and the polycaprolactone diol (PCP 530) showed good room temperature strength, 1.21-1.52x10⁷ Pa (1800-2200 psi). Composition C was sufficiently strong and adherent to result in some bending of the metal tab end as the adhesive sample was broken with cohesive failure. The composition based on the polycarbonate diol (PC) provided higher strength, 1.90x10⁷ Pa (2760 psi) and considerably enhanced elongation or ductility. The adhesive samples extended about 40-50 percent before failure and the steel pieces were bent appreciably by bond failure. Bond failure was cohesive.

Hybrid compositions (D,E) containing about 8 weight percent of the diol as PC and 32 weight percent as the aromatic ester oligomer (HQ/IPA/HQ) or 40 weight percent of the diols as combined aromatic polyester and polycarbonate, showed enhanced room temperature strength, 1.93x10⁷ Pa (~2800 psi) and very good elongation or ductility (about 30 percent sample extension before failure). Again cohesive failure occurred and considerable steel bending was observed.

Compositions in which the TDI/TMP based crosslinker CB75 was used in addition to the hybrid aromatic polyester/polycarbonate combination, showed intermediate but very good strength, 1.62-1.64x10⁷ Pa (2350-2378 psi). Elongation (ductility) was intermediate between compositions C and D, and E.

Composition H (and its replicate J) showed the highest lap shear strength of, 2.07-2.21x10⁷ Pa (3000-3200 psi), the extensibility or ductility of these bonds was again intermediate between C and D, and E. Composition K was a repeat of J with NDI in place of MDI. A somewhat lower strength (2200) and slightly lesser ductility was observed than for K.

Compositions H and J were then tested at -35±5°C, 120°C and 130°C. For comparison, commercial hot melt adhesives PE6300HM and Unirez 2643, known to show good strength from -40°C to moderately high temperatures (-100°C) were also tested. The preparation and testing of the specimens is summarized above and in Table 3.

Composition J (MDI-based) showed excellent low temperature adhesive strength, 2.08x10⁷ Pa (3023 psi). It lost no strength and in fact was somewhat stronger at -35±5°C than at 23°C. It was stronger than, and also more extensible (ductile) than, the commercial polyester hot melt. Composition K (NDI-based) was not quite as strong as J or the commercial adhesives at -35±5°C but still had fairly good strength.

Both experimental adhesives were clearly superior to the commercial adhesives at 120°C. The NDI-based adhesive is clearly better than the MDI-based adhesive at higher temperatures. It still showed 4.44x10⁶ Pa (644 psi) at 130°C, while adhesive J was too weak to test at this temperature.

Hence these new adhesives based on hybrid compositions of aromatic polyester/aromatic polycarbonate diols, combined with an aliphatic polyester diol, and aromatic isocyanates, show a remarkable broad range of useful adhesive properties in this structural strength range.

**TABLE 1.**

| DIFFERENTIAL SCANNING CALORIMETRY^{(a)} OLIGOMER MELTING RANGE | | |
|---|---|---|
| Example | Oligomer Structure^{(b,c)} | DSC Melting,°C |
| 7 | HQDA/IPA/HQDA | 156-161 |
| 5 | HQ/IPA/HQ | 220-225 |
| 8 | PHBA/HQ/IPA/HQ/PHBA | 298-312 |
| 6 | BPA-C(BPA-C)₉-BPA | 198-215 (T_{g} 101) |

| | | |
|---|---|---|
| (a) Perkin Elmer 7 Series Thermal Analyzer, 10°C / minute, 7-8 mg sample (b) Acronyms for components reacted together to produce the oligomer are used to depict the oligomer structure: HQDA = hydroquinone diacetate HQ = hydroquinone, IPA = isophthalic acid, TPA = terephthalic acid PHBA = para hydroxybenzoic acid BPA = bisphenol A (4,4'-isopropylidenediphenol) C = carbonate derived from phosgene (P) (c) Structures of Examples 5, 7 and 8 are all phenolic hydroxyl terminated aromatic ester oligomers based on the above (acronym) summarized structures. Example 9 is a bisphenol A phenolic hydroxyl terminated oligomer with a degree of polymerization (DP) of 9 (based on 10/9 BPA/P mole ratio). | | |

**TABLE 2.**

| ADHESIVE COMPONENT EQUIVALENT WEIGHTS | | |
|---|---|---|
| | Equivalent Weiaht | |
| Component^{a} | OH | NCO |
| PCP530 | 265 | - |
| HQ/IPA/HQ | 174.2 | - |
| PP | 170.2 | - |
| TMP | 44.7 | - |
| PC | 1258. | - |
| CB75 | - | 323 |
| MDI | - | 125.1 |
| NDI | - | 105.1 |

| | | |
|---|---|---|
| (a) For definition of components, see Table 3. | | |

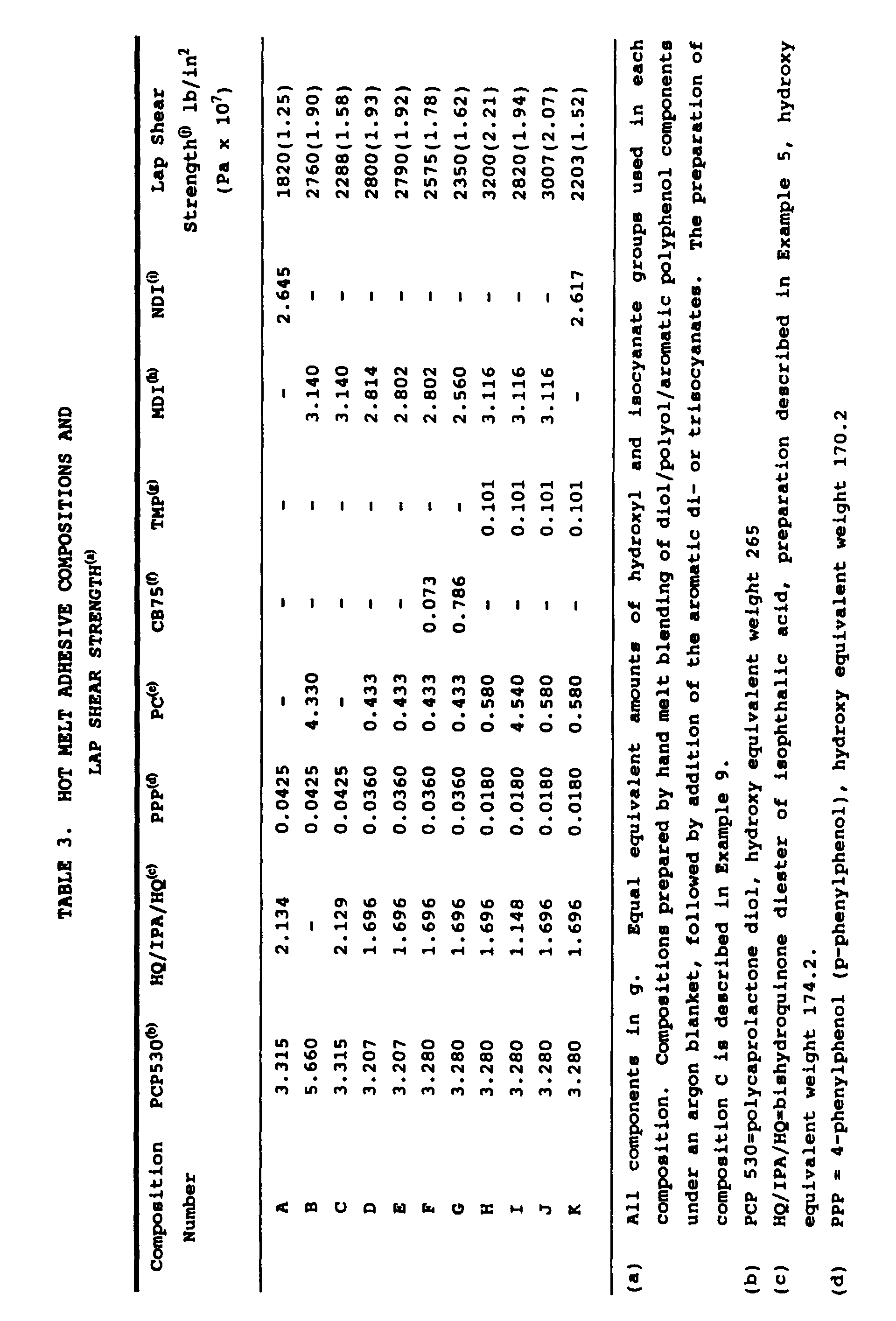

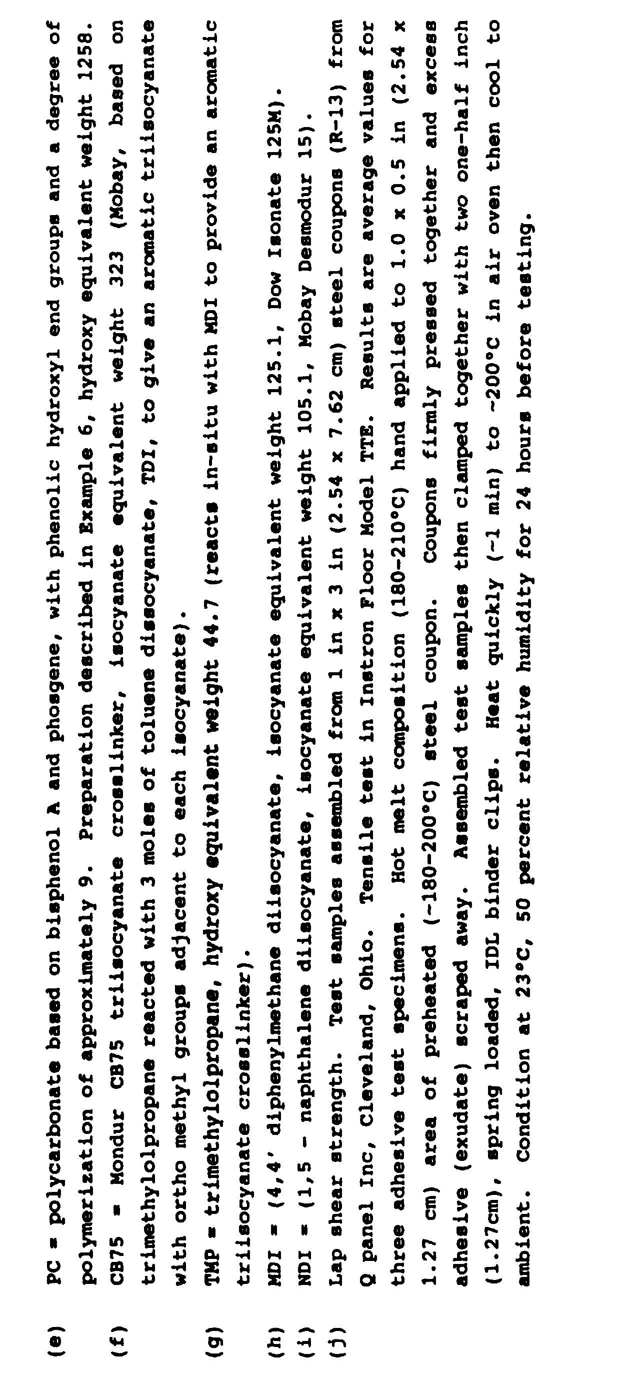

**TABLE 4.**

| THERMAL CHARACTERIZATION OF HOT MELT ADHESIVE COMPOSITIONS | | |
|---|---|---|
| Composition Number | DSC^{(a)} | |
| | T_{g} | Tₘ |
| C | 46 | 144-220 |
| D | 44 | 144-220 |
| E | - | 140-227 |
| F | 44 | 155-222 |
| G | | 165-215 |
| H-a^{(b)} | 46 | 150-209 |
| H-b^{(c)} | 48 | 181-202 |
| I | 49 | 135-193 |
| J | 50 | 150-215 |
| K | 43 | 160-203 |

| | | |
|---|---|---|
| (a) Perkin Elmer 7 Series Thermal Analyzer, 7-8 mg sample, 10°C/min. Compositions measured after about 10 minutes at 200-210°C. | | |
| (b) Composition H as mixed. | | |
| (c) A portion of composition H removed immediately after mixing 1-2 minutes and 0.1 parts by weight dibutyl tin dilaurate catalyst added, then heated another ~10 min. This shifts the melting point up about 30°C. | | |

**TABLE 5.**

| LAP SHEAR STRENGTH^{(a)} | | | | |
|---|---|---|---|---|
| Sample Number | Description | Test Temp. °C^{(b)} | Maximum Load, lbs^{(c)} (N x 10³) | Lap Shear Strength, psi (Pa x 10⁷) |
| Unirez | Commercial | -35±5 | 560(2.49) | 1120(0.772) |
| 2643^{(d)} | Polyamide | | 560(2.49) | 1120(0.772) |
| | | | 600(2.67) | 1200(0.827) |
| | | | 573(2.55) | 1147(0.791) |
| PE6300HM^{(e)} | Commercial | -35±5 | 1025(4.56) | 2050(1.41) |
| | Polyester | | 1060(4.72) | 2120(1.46) |
| | | | 1150(5.12) | 2300(1.59) |
| | | | 1078(4.80) | 2157(1.49) |
| J^{(f)} | (IPA/HQ)/PC/ | -35±5 | 1875(8.34) | 3750(2.59) |
| | PCL/TMP+MDI | | 2060(9.16) | 4120(2.84) |
| | | | 600(2.67) | 1200(0.827) |
| | | | 1511(6.72) | 3023(2.08) |
| K^{(g)} | (IPA/HQ)/PC/ | -35±5 | 300(1.33) | 600(0.414) |
| | PLC/TMP+NDI | | 400(1.78) | 800(0.552) |
| | | | 275(1.22) | 550(0.379) |
| | | | 325(1.45) | 650(0.448) |
| Unirez | Commercial | 23 | 725(3.22) | 1450(1.00) |
| 2643 | Polyamide | | 700(3.11) | 1400(0.965) |
| | | | 750(3.34) | 1500(1.03) |
| | | | 725(3.22) | 1450(1.00) |
| PE6300HM | Commercial | 23 | 650(2.89) | 1300(0.896) |
| | Polyester | | 775(3.45) | 1550(1.07) |
| | | | 565(2.51) | 1130(0.779) |
| | | | 663(2.95) | 1326(0.914) |
| J^{(f)} | See above | 23 | 1500(6.67) | 3000(2.07) |
| | | | 1700(7.56) | 3400(2.34) |
| | | | 1300(5.78) | 2620(1.81) |
| | | | 1503(6.69) | 3007(2.07) |
| K^{(g)} | See above | 23 | 975(4.34) | 1950(1.34) |
| | | | 1500(6.67) | 3000(2.07) |
| | | | 837(3.72) | 1660(1.14) |
| | | | 1102(4.90) | 2203(1.52) |
| Unirez | 2643Commercial | 120 | 3(0.0133) | 6(0.00414) |
| | | | 7(0.0311) | 14(0.00965) |
| | | | 4(0.0178) | 8(0.00552) |
| | | | 4.6(0.0205) | 9.3(0.00641) |
| PE6300HM | Commercial | 120 | 6(0.0267) | 12(0.00827) |
| | | | 4(0.0178) | 8(0.00552) |
| | | | 10(0.0445) | 20(0.0138) |
| | | | 6.7(0.0298) | 13.3(0.00917) |
| J^{(f)} | See above | 120 | 280(1.25) | 560(0.386) |
| | | | 130(0.578) | 260(0.179) |
| | | | 155(0.689) | 310(0.214) |
| | | | 188(0.836) | 377(0.260) |
| K^{(g)} | See above | 120 | 775(3.45) | 1550(1.07) |
| | | | 575(2.56) | 1150(0.793) |
| | | | 500(2.22) | 1000(0.689) |
| | | | 617(2.74) | 1234(0.851) |
| K^{(g)} | See above | 130 | 400(1.78) | 800(0.552) |
| | | | 315(1.40) | 630(0.434) |
| | | | 250(1.11) | 500(0.345) |
| | | | 322(1.43) | 644(0.444) |

| | | | | |
|---|---|---|---|---|
| (a) Adhesive samples prepared using 1x3 in. (2.54x7.62cm) steel coupons (R-13, Q Panel Inc., Cleveland, Ohio). Hot melt composition (~200°C) applied to 1.0x0.5in. (2.54x1.27cm) area of preheated (~150-200°C) steel coupon. Clamped with small springline clamps and allowed to cool slowly. Conditioned at 23°C for 24 hours then at test temperature for ten minutes prior to testing. | | | | |
| (b) Tested with Instron Floor Model TTE Cold (-35±5°C) test specimens prechilled in -40°C isopropanol (chilled with dry ice and tested immediately). Heated samples (120°C, 130°C) tested in Instron temperature control cabinet after equilibrating 10 min. All samples tested at 0.2 in/min (0.51cm/min) have separation rate to break. Maximum load at break for three samples per test set and the mean value are listed (0.5in² (3.23cm²) area). | | | | |
| (c) Cold (-35±5°C) test specimens prechilled. | | | | |
| (d) Union Camp commercial polyamide hot melt adhesive. | | | | |
| (e) H.B. Fuller commercial polyester hot melt adhesive. | | | | |
| (f) Aromatic/aliphatic polyester-polycarbonate diols plus 10 equivalent percent trimethylol-propane (TMP) crosslinker, and 0.05 equivalent percent p-phenyl (PPP) for end capping groups, reacted with diphenyl methane diisocyate (MDI) in nearly 1/1 equivalent ratio of aliphatic and aromatic (phenol) hydroxyl/isocyanate groups. IPA/HQ = bis-hydroquinone/isophthalic acid diester diol, PC = hydroxyl (phenol) capped bisphenonal A/phosgene polycarbonate oligomer with degree of polyermization = 9, PCL= PCP530 (polycaprolactone diol, MW 530). | | | | |
| (g) Aromatic/aliphatic polyester - polycarbonate diols, plus 10 equivalent percent trimethylolpropane (TMP) crosslinker, and 0.05 equivalent percent p-phenylphenol (PPP) for end capping groups, reacted with 1,5-naphthalene diisocyanate, or NDI, in nearly 1/1 equivalent ratio of aliphatic and aromatic (phenol) hydroxyl/isocyanate groups, same polyester and polycarbonate diol oligomers as in adhesive J. | | | | |

The following examples are disclosed to further teach the practice of the invention and are not intended to limit the invention as it is delineated in the claims.

### EXAMPLE 1 (Comparative Example)

### Preparation of Bis-Hydroquinone Ester of Isophthalic Acid

Two hundred fifty ml of dry (H₂O < 0.001%) dimethyl acetamide (DMAC; Dimethylacetamide; Aldrich 21,707-2) and 43.5 g (44.5 cc; 0.525 moles) dry (over CaH₂) pyridine (Aldrich 36,057-0) were added to a flame dried 2 liter, 3 neck round bottom flask equipped with a Trubore stirrer (Teflon paddle), inert gas (argon) inlet and outlet, thermometer, and stoppered pressure equalizing addition funnel. While stirring slowly with an argon flush, vacuum dried (60°C, 24 hr, 0.5 Torr) crystalline hydroquinone (99%; Aldrich 1,790-2; 220.2 g; 2.00 mole) was added slowly enough to prevent clumping. The isophthaloyl chloride (IPC; Aldrich 36,0570-0 as received; 50.8 g; 0.250 moles) was dissolved separately in 300 ml additional dry dimethyl acetamide in a flame dried 500 ml round bottom flask, also under argon flushing. The IPC/DMAC was gently heated on a heating mantle while hand slurrying to dissolve. The clear light yellow solution was then placed in the dropping funnel and added to the rapidly stirred HQ solution over a 45 minute period. The temperature quickly rose to about 55°C then stabilized until the IPC addition was complete. There was no precipitate (pyridine hydrochloride) at this point. A small aliquot of this solution When cooled to ~5°C exhibited crystallization of water soluble pyridine hydrochloride. However, the entire reaction mixture was precipitated in 4 liters of distilled water. Surprisingly, this provided insoluble product diester and solubilized the unreacted HQ and the pyridine hydrochloride. The light yellow precipitate was easily filtered using a 25-50 µm fritted glass Buchner funnel and aspirator vacuum. It was washed thoroughly with distilled water, air dried overnight in a thin layer in a pyrex baking dish, then vacuum dried to provide 69 g of light yellow, powdery solid with a Fisher-Johns hot stage melting point of 221-222°C. This was a 79 percent recovery based on a theoretical yield of 87.6 g of the bis-hydroquinone ester of isophthalic acid. DSC thermal analysis (7.5 mg, Perkin Elmer 7 Series Thermal Analyzer, 10°C/min) showed a melting exotherm at 220-225°C. The proton NMR spectrum was determined using a Brucker high resolution NMR. There are 14 total proton assignments, with 2 phenolic protons (14.8 percent theoretical). Found were 12.90 percent phenolic protons at δ 9.50 (ppm). This was in good agreement with the expected total.

### EXAMPLE 2 (Comparative Example)

### Preparation of Phenolic-hydroxyl Terminated Bisphenol A/Phosgene Polycarbonate Oligomers

The 4,4'-isopropylidenediphenol (Bisphenol A) (BPA; Aldrich 13,302-7, 99.4%; 45.3 g, 0.2000 mole; vacuum dried at 60°C, 0.2 Torr for 4 hours) was added to a flame dried, argon purged, 300 ml, 3 neck round bottom pyrex flask fitted with an inert (argon) gas inlet and outlet, flame dried dropping funnel and Trubore stirrer with Teflon blade. Ninety ml of dry methylene chloride (CH₂Cl₂; Burdick and Jackson 300-4, dried over CaH₂) followed by 52.0 ml dry triethylamine (Aldrich 13,206-3; dried over CaH₂; 0.187 mole) were added through the dropping funnel. The dropping funnel was rinsed with 10 ml more CH₂Cl₂. The BPA was dissolved by stirring slowly for 30 minutes at room temperature. A slight positive argon pressure was maintained (1 bubble of gas per 2 or 3 seconds through a mineral oil filled gas outlet bubble tube). A 50 cc hypodermic syringe was predried (disassembled, 1 hour in air oven at 110°C) and cooled to room temperature in a desiccator containing Drierite. It was reassembled and rinsed and conditioned with some phosgene in toluene, which was ejected and discarded. The syringe was loaded and 50 cc phosgene solution (Fluka 79380, 20% in toluene; 1.93 molar, 2% HCl impurity) was delivered to the dropping funnel. The syringe was loaded again and an additional 43.3 cc of the phosgene solution delivered for a total of 93.3 cc (17.8 g, 0.180 mole). Twenty-five ml of CH₂Cl₂ was layered on the phosgene solution and then added with rapid dropwise addition to the rapidly stirred bisphenol A solution. A precipitate appeared after about 7 ml of the phosgene solution was added. As the addition continued, the reaction mixture began to heat up. The flask was cooled with a water/ice bath to keep it near room temperature. All phosgene solution was added after about 33 minutes. The dropping funnel was rinsed into the reaction flask with an additional 25 ml CH₂Cl₂. The reaction mixture was a slightly viscous moderately thick slurry. It was left stirring slowly overnight at room temperature. The slurry appeared unchanged the next morning. It was easily filtered through a "C" fritted glass Buchner funnel providing a clear light yellow solution and a fine white precipitate. The precipitate was washed three times with -50 ml portions of CH₂Cl₂ and air dried. Obtained were 36.7 g water soluble white powder (72 percent recovery based on theoretical pyridine hydrochloride yield of 50.9 g). The missing salt was presumed dissolved in the oligomer solution.

The polycarbonate oligomer solution was concentrated to ~200 ml and precipitated in a ten fold excess (~2 liters) of reagent grade methanol by slow hand addition (~45 minutes) to the rapidly hand-stirred methanol. A fine white precipitate that readily separated to give a cloudy supernatant liquid was obtained. This was filtered through number 2 Whatman filter paper on a Buchner funnel. It was washed four times with 50 ml portions of fresh methanol and air dried overnight. It was then vacuum dried at room temperature for two days. Obtained were 43.1 g of white powder. This is an 87.5 percent recovery based on a theoretical oligomer yield of 50.2 g. Apparently some pyridine hydrochloride and product oligomer either were dissolved in, or colloidally dispersed in, the methanol filtrate.

The oligomer melted at ~205-215°C on a Fisher-Johns hot stage melting point apparatus. DSC thermal analysis showed a T_{g} (endotherm) at 101°C and a melting exotherm of 198-215°C. Proton NMR analysis in deuterated DMSO gave a spectrumconsistent with a DP9 polycarbonate oligomer with phenolic hydroxyl end group protons (δ, ppm 9.2). This is based on the presence of 60 methyl protons, 80 aromatic protons and 2 hydroxyl protons. Theoretical hydroxyl protons, 1.42%; found 1.48%.

### EXAMPLE 3 (Comparative Example)

### Hot Melt Adhesive Composition C

The polycaprolactone diol (PCP-530; Aldrich 18,940-5; 3.315 g (0.0250 eq), paraphenylphenol (PPP; Aldrich 13,434, 97%; 0.0425 g, 0.0050 eq) and bis-hydroquinone isophthalic acid diester oligomer (HQ/IPA/HQ, phenol end groups from Example 1 ; 2.129 g, 0.0245 eq) were melted together while hand mixing with a stainless steel spatula in a 180 ml electrolytic (deep) beaker under an inert gas (argon) blanket at about 150°C. The diphenylmethanediisocyanate (crystalline MDI, Isonate 125M, Dow, mp 37°C; 3.140, 0.0500 eq) was added while the melt was stirred at ~150°C. It was quickly incorporated in the melt and the viscosity increased to a fairly high level in about five minutes. The melt was heated to 180°C and the viscosity decreased to a very easily stirred level. Adhesive specimens were then hand assembled by applying melted adhesive to 0.5 x 1.0 inch areas (1.27 x 2.54 cm) on the ends of 1 x 3 x 0.032 inch (2.54 x 7.62 x 0.0813 cm) dull finish steel 1/4 hard (R-13) coupons (Q Panel Inc., Cleveland, Ohio). The steel test coupons had been hand cleaned/degreased first with a kimwipe soaked with toluene, then one soaked with methyl alcohol, and preheated on a hot plate set at ~180°C surface temperature. The test samples were adjusted to give 0.5 in² (3.23 cm²) contact area, firmly pressed together by hand, the excess adhesive exudate scraped away and the assembled test specimen clamped together with two, one-half inch (1.27cm), spring loaded, IDL binder clips. One clip was placed on each side of the overlapped bond area. The partially cooled samples were then placed in a 200°C air oven briefly (3-5 minutes) to insure that the adhesive had flowed and contacted all the metal surfaces. The samples were then allowed to cool to ambient temperature and placed in a constant temperature/humidity (73 F, 20% relative humidity) room to condition for 24 hours prior to testing.

### EXAMPLE 4 (Comparative Example)

### Scale-up Preparation of Bis-Hydroquinone Ester of Isophthalic Acid

In order to provide an additional quantity of oligomer, a 1.5 fold larger scale production of the bis-hydroquinone ester of isophthalic acid was undertaken. The experimental apparatus and details were essentially identical to those described in Example 1.

Three hundred seventy-five milliliters of dry (H₂O < 0.001%) dimethylacetamide (DMAC; Aldrich 21,707-2) and 65.3 g dry (over CaH₂) pyridine (Aldrich 36,057-0; 66.7 cc.; 0.825 moles) were added to a hot-air gun dried 3 1, 3 neck round bottom flask equipped with a stoppered pressure equalizing addition funnel, Trubore stirrer (Teflon paddle), inert gas (argon) inlet and outlet, heating mantle with I²R Thermowatch controller, and external thermocouple monitor thermometer to measure pot temperature. While stirring slowly with an argon flush, hydroquinone (HQ; 99%; Aldrich 1,790-2; 327.0 g; 3.0 moles) was added over a 5 minute period. The mixture was then heated to ~50°C where all the hydroquinone dissolved. A solution of isophthaloyl chloride (IPC; Aldrich 36,0570-0 74.6 g; 0.375 moles) in 450 ml additional dry dimethylacetamide was prepared in a 1-liter erlenmeyer flask. Gentle heating was required to completely dissolve the isophthaloyl dichloride. The solution was transferred to the 1-liter dropping funnel and added dropwise (~5 drops/second) to the rapidly stirred (50°C) HQ solution over a 1.5 hour period. The reaction mixture was then slowly heated to ~82°C where the pyridine appeared to reflux. After an additional 2 hours, the heating mantle was turned off and the solution allowed to cool overnight under an argon flush prior to precipitation. The reaction mixture was precipitated by slowly pouring the solution into 15 1 distilled water in a 3.785 1 (5 gallon) pail equipped with a Talboy stirrer and stainless steel dual blade Jiffy mixer. The white suspension was stirred for an additional 30 minutes, then allowed to settle (digest) for ~2 hours. The precipitate was then filtered with a Büchner funnel and no. 4 Whatman filter paper, and washed with an additional 1800 ml distilled water. A solubility check of the product showed it to be soluble in methanol, ethanol, and isopropanol, and insoluble in methylene chloride and toluene. The product was transferred to an evaporating dish, dried overnight in a vacuum oven (762mm; ~30 in Hg vacuum, 65°C), then ground with a mortar and pestle, returned to the vacuum oven for another day (< 0.5 wt% loss) and placed in a jar. The final washed, dried, ground product yield was 103.9 g or 79.1 percent recovery (identical to the smaller scale batch-Example 5) based on 131.4 g theoretical yield of the bis-hydroquinone ester of isophthalic acid. DSC thermal analysis showed a melting exotherm at 215°C. Optical microscopic analysis using polarized light showed an initial melting point of 211°C, a liquid-crystalline region between 211 and 219°C illustrated in FIGS 1 (a) and 1 (b), and a complete melt occurring at 223°C.

### EXAMPLE 5 (Comparative Example)

### Preparation of Phenolic-Hydroxyl Terminated Bisphenol A/Phosgene Polycarbonate Oligomers

In order to provide an additional quantity of oligomer for hot melt adhesive formulation, a 4.5 fold larger-scale preparation of the phenolic-hydroxyl terminated bisphenol A/phosgene polycarbonate oligomer was undertaken. The experimental apparatus and details were essentially equivalent to those described in Example 2. The 10x flask volume scale-up (300 ml to 3 1) allowed a doubling of the solvent (methylene chloride) used which provided better mixing and heat transfer. The following was added to a 3 liter, 3 neck round bottom flask equipped with a Trubore stirrer (Teflon paddle), inert gas (argon) inlet and outlet with flowmeter: 4,4'-isopropylidenediphenol (bisphenol A, Aldrich 13, 302-7, 99.4%, 204.23 g, 0.90 moles); triethylamine (Aldrich 13,206-3; dried oven CaH₂; 234.5 ml, 1.70 moles); and methylene chloride (CH₂Cl₂; Burdick and Jackson 300-4, dried oven CaH₂; 1350 ml). The flask was surrounded by a water/ice bath to control pot temperature.

The Phosgene solution (Fluka 79380, 20% in toluene; 1.93 molar, 2% HCl impurity, 365.14 g, 0.810 moles) was added dropwise (~5 drops/second) over a one hour period, using an ice bath to maintain the pot temperature at 23 ± 1°C. Precipicate was noted after about 55.5% of the solution had been added. The reaction mixture was stirred for an additional 2.5 hours at which point it appeared to be more viscous. The reaction mixture was allowed to stand overnight under an argon purge. The reaction mixture was then filtered and the precipitate washed with CH₂Cl₂ and dried in a vacuum oven. A total of 138.0 g of by-product triethylamine hydrochloride (or ~62.3% theoretical) was recovered. The missing salt was presumed dissolved in the oligomer solution.

The polycarbonate oligomer solution was concentrated down to ~1 l and precipitated in a ten fold excess (~10 l) of reagent grade methanol in a 3.785 l (5 gallon) pail equipped with a Talboy stirrer and stainless steel twin-rotor Jiffy mixer. The precipitate was allowed to settle and was then filtered through a Büchner funnel with No. 2 Whatman filter paper and washed with -1 1 additional methanol. The product was then transferred to an evaporating dish and dried overnight (762mm; 30 in Hg vacuum; 65°C). The final polycarbonate product yield was 142.57 g (63.1% theoretical). DSC thermal analysis showed a melting exotherm at 182°C.

### EXAMPLE 6 (Comparative Example)

### Hot Melt Polycarbonate Composition L

The polycaprolactone diol (PCP-530; Aldrich 18,940-5; 3.280 g), paraphenylphenol (PPP; Aldrich 13,434, 97%; 0.0180 g), bis-hydroquinone isophthalic acid diester oligomer (HQ/IPA/HQ, phenol end groups from Example 4; 1.696 g) and polycarbonate (PC; from Example 5 ; 0.580 g) were melted together while hand mixing with a stainless steel spatula in a 180 ml electrolytic (deep) beaker under an inert gas (argon) blanket at about 210°C. Trimethyolpropane (TPM, 0.101 g) with a hydroxy equivalent weight of 44.7 was reacted in situ with 4,4' diphenylmethane diisocyanate (crystalline MDI, Isonate 125M, Dow, mp 37°C; 3.116 g) with a hydroxy equivalent weight of 44.7 to give an aromatic triisocyante that was added to the previous melt while the melt was stirred at ~150°C. It was quickly incorporated in the melt and the viscosity increased to a fairly high level in about five minutes. The melt was heated to 180°C and the viscosity decreased to a very easily stirred level. Adhesive specimens were then hand assembled by applying melted adhesive to 0.5 x 1.0 inch areas (1.27 x 2.54 cm) on the ends of 1 x 3 x 0.032 inch (2.54 x 7.62 x 0.0813 cm) dull finish steel 1/4 hard (R-13) coupons (Q Panel Inc., Cleveland, Ohio). The steel test coupons had been hand cleaned/degreased first with a Kimwipe soaked with toluene, then one soaked with methyl alcohol, and preheated on a hot plate set at ~180°C surface temperature. The test samples were adjusted to give 0.5 in² (3.23 cm²) contact area, firmly pressed together by hand, the excess adhesive exudate scraped away and the assembled test specimen clamped together with two, one-half inch (1.27cm), spring loaded, IDL binder clips. One clip was placed on each side of the overlapped bond area. The partially cooled samples were then placed in a 200°C air oven briefly (3-5 minutes) to insure that the adhesive had flowed and contacted all the metal surfaces. The samples were then allowed to cool to ambient temperature and placed in a constant temperature/humidity (73°F; 22.8°C, 20% relative humidity) room to condition for 24 hours prior to testing.

### EXAMPLE 7

### Preparation of Phenolic-Hydroxyl Terminated Biphenylenesulfide Oligomers

The following were added to a 3 liter, 3 neck round bottom flask equipped with a Trubore stirrer (Teflon paddle), inert gas (argon) inlet and outlet with flowmeter, Claisen head with both pot and distillate thermometers, water cooled distillation condenser, distillation take-off, and receiver flask: 91.74 g 4,4'-dibromobiphenyl (4,4' DBBP; Aldrich 92-86-4; 98%, 0.30 moles); 26.21 g 4-bromophenol (4-BP; Aldrich 106-41-2; 99%; 0.15 moles); 90.07 g sodium sulfide nonahydrate (Na₂S·9H₂O; Aldrich 1313-84-4; 0.375 moles); 39.75 g sodium carbonate (Na₂CO₃; Baker 3602-01; 0.375 moles); and 1.8 1 of 1-methyl-2-pyrrolidinone (NMP; Aldrich 27,045-8, 99+%). The flask was surrounded by a 2-piece Glasscol spherical heating mantle with internal thermocouple leads to measure flask surface temperature, connected to independent Variac rheostats, controlled by an I²R Thermowatch temperature L8-2000 SS capacitance monitor attached to the pot thermometer.

The Aquamarine blue mixture was stirred under a slow Argon purge (0.3-0.4 SCFH; 8.5-9.5x10⁻³ m³/hr) while heating (~40/~55 V; Top/Bottom) to the target polymerization temperature of ~165°C. As the pot temperature rose over ~108°C, condensate was noted so the Claisen adapter was insulated with glass wool, the Argon flow rate increased to ~1.0 SCFH (2.8x10⁻² m³/hr), and the distillate (water from Na₂S·9H₂O) collected. The temperature was maintained at ~165°C for 2.5 hours during which time the distillate collection rate slowed and vapor temperature dropped. The heating mantles were then removed and the flask was cooled with an air line to near room temperature. The resulting dark emerald green solution was slowly added to rapidly stirring 14 1 of water/methanol (71/29, V/V) in a 5 gallon (3.785 1) pail equipped with a Trubore stirrer and stainless steel twin-rotor Jiffy mixer. The beige precipitate/suspension was stirred for ~30 minutes, then allowed to settle overnight.

The product was recovered by filtration using a BUchner funnel and no. 4 Whatman filter paper, initially dried, then placed in a 25-50µ glass butted funnel and washed with ~500 ml methanol. The washed product was then placed in a vacuum oven (~30 in; 762 mm Hg, 65°C) dried, ground with a mortar and pestle, returned for further drying and placed in a screw-cap amber bottle. The final washed, dry, ground product yield was 60.85 g or ~79.6 percent of the theoretical yield of 76.45 g for the DP = 4 oligomer (MW = 955.3 g/mole theoretical).

Samples of the product were analyzed using Differential Scanning Calorimetry (DSC), Infrared Spectroscopy (ATR) and optical microscopic techniques. The DSC showed a single sharp peak near ~153°C, indicating a relatively pure compound. The infrared analysis showed the presence of hydroxyl end-group functionality. The optical microscopy (using polarized light) as a function of temperature indicated that the material possessed strong liquid-crystalline behavior as shown in FIGS.2 (a) and 2(b) over a broad range, from -175°C to over -220°C, completely melting at ~242°C. The presence of reactive hydroxyl end-group functionality was confirmed by reaction of the product with a stoichiometric amount of MDI producing a thick urethane polymer.

Hot melt adhesive test samples were prepared as described previously under Example 6, Hot Melt Polycarbonate Composition L, but with the phenolic-hydroxyl terminated biphenylenesulfide oligomer being substituted for the polycarbonate portion on an equivalent basis. Lap shear strength results were obtained and preliminary indicated the material to have a lap shear strength of about two times that of commercial polyester PE 6300 from Henkel (formerly H.B. Fuller).

### EXAMPLE 8

### Preparation of Poly 4(or 5)-imino-1,3-imidazolidine-2, 5 (or 4)-dione-1,3-diyl Oligomers with Phenolic Hydroxyl End Groups

A 500-ml three-neck flask was fitted with a Trubore stirrer with Teflon blade (driven by a T-line laboratory electrical stirrer), an argon gas inlet and a thermometer positioned to penetrate into the reaction solution via an adapter with a gas outlet side arm. The flask was flame dried and cooled under an argon flush. Then 31.7 g (0.127 mole) of MDI (Dow Isonate 125 M) and 150 ml NMP (Aldrich 27,045-8, 99+ percent, dried over Fluka 3A type molecular sieve 69828) were placed in the flask. The NMP was heated until the MDI all just dissolved, then cooled to near ambient. Then 8.896 g acetone cyanohydrin (Aldrich A1,000-0 dried over same Fluka molecular sieve) were added by syringe. The 1.0 cc of triethylamine (TEA; Aldrich 13,206-3 dried over the Fluka molecular sieves) was added by syringe, followed by 2.5 cc of a solution of NaCN (0.2000 g/100 ml NMP, same NMP as above). Immediately an exotherm was noted. The temperature of the well stirred solution rose from 28°C to 43.8°C over the next 1 hr 17 min. The reaction flask was insulated with Pyrex wool during this period. The temperature then began to drop. After about 15 min, it was 43.0°C. Then 4.65 g (0.0422 mole) of Aldrich H1,790-2 hydroquinone, 99 percent was added and dissolved in 25 ml of the same dry NMP. It was added all at once. The temperature immediately began to rise again. In 7 min, it had reached 47.0°C. At this point, the viscosity increased very rapidly and the initially moderately viscous, clear light yellow solution gelled to a very stiff gel which could not be stirred. The gel was left to stand overnight under the Ar flush. The next morning the gel had completely disappeared. The mixture had spontaneously reverted to a clear easily stirred moderate viscosity liquid. A small sample of this solution when precipitated in methanol, washed with methanol and dried, melted to a clear moderate viscosity liquid at 270-295°C. Apparently a crosslinking reaction of terminal isocyanate groups with pendant imino (=NH) sites produced a branched oligomer which crosslinked when chain extended with the hydroquinone. However, unreacted hydroquinone hydroxyl groups then may have displaced these crosslinking urea linkages to form more stable urethane bonds. Hence the final product may have assumed the nearly linear oligomer structure that the 6/5 MDI/HCN mole ratio was chosen to provide. The end groups are presumed to be p-hydroxyphenyl groups from end-capping of the terminal isocyanates with hydroquinone. This is a unique, difunctional phenolic end-group oligomer.

### EXAMPLE 9

### Preparation of Polyparabanic Acid Oligomer With Phenolic Hydroxyl End Groups

A similar reaction to Example 8 was carried out using the same reagents and apparatus. However, an excess of the HCN provider (acetone cyanohydrin) was used in a first stage reaction. Hence 8.511 g (0.1000 mole) of acetone cyanohydrin were added to a solution of 12.151 g (0.0485 mole) MDI in 150 cc NMP. To this were added 0.5 cc of the dry TEA, followed by 2.0 ml of the 0.2000 g/100 ml solution of NaCN in NMP. An immediate exotherm was noted. In 15 min the temperature had climbed from 28°C to 53.5°C. It then started to fall and reached 47°C after another 10 min. Then 25.026 g (0.1000 mole) MDI in 100 cc warm NMP and 11.011 g (0.0500 mole) hydroquinone in 50 cc warm NMP were added separately, the MDI first all at once, followed by the HQ, all at once, about 2 mins later. Another exotherm occurred with the temperature rising to 58°C in about 10 min. The yellow clear solution increased in viscosity initially, then fell again to a moderate level. No gel formation was noted. The mixture was stirred overnight under argon at a moderate rate while maintaining the temperature at 45°C. The product solution was perhaps slightly less viscous but otherwise unchanged. It was precipitated in ~3 liters of methanol in a Waring blender run at moderate speed and filtered on a coarse (~25 µm) fritted funnel. It was washed seven times in the blender with about 600 ml portions of methanol, until the methanol wash demonstrated no turbidity when dropped into tap water. A small portion was dried (0.7 g) and the melting point of the imino-group containing oligomer measured on the Fisher Johns melting point hot stage. It melted at 240-250°C.

The remainder of the oligomer was redissolved in about 350 ml of NMP in the blender. Then 11 g of concentrated HCl, diluted with an equal volume of distilled water, was added to the rapidly stirred yellow, clear solution. Copious precipitation of NH₄Cl occurred immediately and the solution became a clear, green color. The amount of HCl used was slightly in excess of the amount theoretically required (~9.8 g) to convert the C=NH groups to -C=O groups, white providing NH₄Cl by-product. The clear supernatant was then precipitated in distilled water and filtered through the 25 µm frit. The white powder was washed three times with water, three times with methanol and three times with 30-60°C pet ether and air dried. The slightly yellowish-white powder melted (Fisher Johns) at 220-230°C. DSC analysis indicated a melting point of ~207°C. Hot melt adhesive test samples were prepared as described under Example 6, Hot Melt Polycarbonate Composition L, but with the polyparabanic acid oligomer with phenolic hydroxyl end groups being substituted for the polycarbonate portion on an equivalent basis. Lap shear strength results were obtained and preliminary results indicated the material to be comparable to commercial polyester adhesives such as PE 6300.

### EXAMPLE 10

### Simulated Tropical Exposure Test

The test exposure conditions of 38.5°C and 95 percent relative humidity constitute a tropical-like environment. This so called "hot/wet exposure condition" is also considered quite severe. This test was also run for 5 weeks and the samples were re-equilibrated 48 hours at 23°C and 50 percent relative humidity prior to testing. Again, the conditioning might need to be carried out longer to re-establish a true absorbed water equilibrium. The results are presented in Table 6

In this case, the commercial control showed a sharp decline to 2.24x10⁶ Pa (325 psi; 76 percent decrease). On the other hand, the MDI-based experimental adhesive (Sample 24) has decreased to 1.38x10⁷ Pa (1998 psi; 36 percent decrease). Although this is a moderately large decrease, it is substantially less than the control. It is again interesting to note that one individual sample is still at 2.21x10⁷ Pa (3200 psi; i.e., no decrease from normal average) and two others have only decreased about 20 percent. As above, this suggests that the bond strength of this adhesive can possibly be significantly preserved under these exposure conditions by some modification of adhesive application procedure.

The Isonate 143L-based adhesive samples, however, showed a much bigger decrease to 7.1x10⁶ Pa (1030 psi; 67 percent decrease). This is quite surprising considering the comparable results for the MDI and Isonate 143L adhesives . The spread in the individual test results is extremely broad, again suggesting some application factor results in widely varying susceptibilities to water absorption.

**TABLE 6**

| LAP SHEAR STRENGTH OF 0.5 IN² (3.23cm²) ADHESIVE BONDED^{(a)} SAMPLES AFTER 5 WEEKS AT 100°F (38.5°C) AND 95 PERCENT RELATIVE HUMIDITY^{(b)} | | |
|---|---|---|
| Sample | Isocyanate Type | Strength, psi (Pa x 10⁷) |
| 23 | PE 6300^{(c)} | 380 (0.262) |
| | | 480 (0.331) |
| | | 50 (0.0345) |
| | | 400 (0.276) |
| | | 320 (0.221) |
| | | 320 (0.221) |
| | | Average 325 (0.224) |
| 24 | MDI | 1240 (0.855) |
| | | 2380 (1.64) |
| | | 1400 (0.965) |
| | | 3230 (2.23) |
| | | 2500 (1.72) |
| | | 1240 (0.855) |
| | | Average 1998 (1.38) |
| 25 | Isonate 143L | 1010 (0.696) |
| | | 1000 (0.689) |
| | | 880 (0.607) |
| | | 760 (0.524) |
| | | 1110 (0.765) |
| | | 1420 (0.979) |
| | | Average 1030 (0.710) |

| | | |
|---|---|---|
| (a) Adhesive samples prepared using R-13 cold rolled steel coupons following the procedure of Table 8, footnote (c), 10 min at 200°C and 2-4 mil (0.5-0.1mm) film prepared following the procedure of Table 9, footnote (a). Hot melt adhesives MDI and Isonate 143L . | | |
| (b) Samples conditioned 48 hours at 73°F (23°C) and 50 percent relative humidity, then tested at 23°C, 0.2 in/min (0.5cm/min) Instron jaw separation rate; 0.5 in/min (1.27cm/min) chart speed; 2.0 inch (5.08cm) jaw separation. | | |
| (c) Henkel commercial hot melt polyester. | | |

### EXAMPLE 11

### Ambient Temperature water Immersion Test

Underwater immersion of bonded steel samples constitutes a very severe test. This type of test was also carried out for five weeks. The use of distilled water makes this an especially aggressive test, even at room temperature. This is demonstrated by the fact that all the control samples except one had actually fallen apart by the end of the period. However, the MDI-based adhesive still retained 1.04x10⁷ Pa (1513 psi). This equates to a 49 percent strength decrease. Again, the Isonate 143L-based adhesive samples average strength decreased more sharply to 9.38x10⁶ Pa (1360 psi; 56 percent decrease). Yet two of these individual samples were comparable in strength 1.45x10⁷, 1.30x10⁷ Pa (2100, 1880 psi) to the highest MDI strength 1.36x10⁷ Pa (1970 psi). As before, this extremely wide variability suggests that integrity of the adhesive bonds is being breached by application factors.

**TABLE 7**

| LAP SHEAR STRENGTH OF 0.5 IN² (3.23cm) ADHESIVE BONDED^{(a)} SAMPLES AFTER 5 WEEKS IMMERSION IN 23°C DISTILLED WATER^{(b)} | | |
|---|---|---|
| Sample | Isocyanate Type | Strength, psi (Pa x 10⁷) |
| 26 | PE 6300^{(c)} | 120 (0.0827) |
| | | 0 |
| | | 0 |
| | | 0 |
| | | 0 |
| | | 0 |
| | | Average 20 (0.0138) |
| 27 | MDI | 1530 (1.05) |
| | | 1300 (0.896) |
| | | 1080 (0.745) |
| | | 1970 (1.36) |
| | | 1680 (1.16) |
| | | 1520 (1.05) |
| | | Average 1513 (1.04) |
| 28 | Isonate 143L | 1880 (1.30) |
| | | 610 (0.421) |
| | | 1690 (1.17) |
| | | 2100 (1.45) |
| | | 920 (0.634) |
| | | 960 (0.662) |
| | | Average 1360 (0.938) |

| | | |
|---|---|---|
| (a) Adhesive samples prepared using R-13 cold rolled steel coupons following the procedure of Table 8, footnote (c), 10min at 200°C and 2-4mil (0.05-0.1mm) film prepared following the procedure of Table 9, footnote (a). Hot melt adhesives MDI and Isonate 143L. | | |
| (b) Samples conditioned 48 hours at 73°F (23°C) and 50 percent relative humidity, then tested at 23°C, 0.2 in/min (~/5cm/min) Instron jaw separation rate; 0.5 in/min (1.27cm/min) chart speed; 2.0 inch (5.1cm) jaw separation. | | |
| (c) Henkel commercial hot melt polyester. | | |

### EXAMPLE 12

### 80°C Water Immersion Test

The exposure test in water was also run with the distilled water chambers heated to 80°C for five weeks (Table 15). The commercial polyester control fell apart in less than 16 hours (overnight during the first day of exposure). The experimental adhesive samples remained intact through the five week period. The steel corroded badly during this period. The samples were encrusted with rust and the edges of the adhesive bond lines turned white. Nevertheless, when the samples were removed from the chambers and hand cleaned, they were all intact and qualitatively too strong to pull apart with the bare hands. They were equilibrated at 23°C and 50 percent relative humidity for 48 hours before tensile testing at 23°C. The average strengths of both the MDI and the Isonate 143L samples were 1.03x10⁶ Pa (150 psi).

Samples had also been prepared by bonding glass cover slides (microscope slides) together with film adhesive under the same bonding conditions. The same results were obtained. The commercial polyester PE 6300 samples fell apart overnight during the first day of exposure, while the experimental samples remained intact for five weeks. They also were qualitatively too strong to pull apart manually.

**TABLE 8**

| LAP SHEAR STRENGTH OF 0.5 IN² (3.23cm²) ADHESIVEBONDED^{(a)} SAMPLES AFTER 5 WEEKS IMMERSION IN 80°C DISTILLED WATER^{(b)} | | |
|---|---|---|
| Sample | Isocyanate Type | Strength, psi (Pa x 10⁷) |
| 29 | PE 6300^{(c)} | 0 |
| | | 0 |
| | | 0 |
| | | 0 |
| | | 0 |
| | | 0 |
| | | Average 0 |
| 30 | MDI | 60 (0.0414) |
| | | 280 (0.193) |
| | | 250 (0.172) |
| | | 120 (0.0827) |
| | | 70 (0.0483) |
| | | 125 (0.0862) |
| | | Average 151 (0.104) |
| 31 | Isonate 143L | 120 (0.0827) |
| | | 225 (0.155) |
| | | 200 (0.138) |
| | | 130 (0.0896) |
| | | 110 (0.0758) |
| | | 100 (0.0689) |
| | | Average 148 (0.102) |

| | | |
|---|---|---|
| (a) Adhesive samples prepared using R-13 cold rolled steel coupons following the procedure of Table 8, footnote (c), 10min at 200°C and 2-4mil (0.05-0.1mm) film prepared following the procedure of Table 9, footnote (a). Hot melt adhesives MDI and Isonate 143L. | | |
| (b) Samples conditioned 48 hours at 73°F (23°C) and 50 percent relative humidity, then tested at 23°C, 0.2 in/min (0.5cm/min) Instron jaw separation rate; 0.5 in/min (1.27cm/min) chart speed; 2.0inch (5.1cm) jaw separation. | | |
| (c) Henkel commercial hot melt polyester; all samples fell apart in less than 16 hours. | | |

## Claims

1. A stable, melt-processable, polymer composition comprising a compound with labile-hydrogen functionality and a compound with isocyanate functionality wherein said labile-hydrogen compound and said isocyanate compound are linked by a thermally-reversible, isocyanate-labile hydrogen linkage that has the characteristic of dissociating into said labile-hydrogen compound and said isocyanate compound as a melt and wherein said labile hydrogen or said isocyanate compound contains a polyarylsulfide, excluding polyphenylenesulfide, having phenolic hydroxyl end groups, or a polyarylimidazolidine having phenolic hydroxyl end groups wherein said polyarylsulfide is biphenylenesulfide or a polyarylsulfide in which the aryl group is represented by anthracene or anthraquinone, or any other C₆ - C₁₄ groups having liquid crystal character, phenolic hydroxyl end groups, and a degree of polymerization of 1 to 20; said polyarylimidazolidine is: 4-imino-1,3-imidazolidine-2,5-dione-1,3-diyl, 5-imino-1,3-imidazolidine-2,4-dione-1,3-diyl, 1,3-imidazolidine-2,4,5-trione-1,3-diyl, or mixtures thereof with said polyarylimidazolidine having phenolic hydroxyl end groups and a degree of polymerization of 1 to 20.

2. A process for preparing a polyarylimidazolidine with hydroxyl end-capping groups and a degree of polymerization of 1 to 20 comprising:
a) mixing an excess of hydrogen cyanide with an aryl diisocyanate and a catalyst in a nonaqueous solvent to afford an exothermic reaction;
b) adding a stoichiometric amount of said aryl diisocyanate to react with said excess hydrogen cyanide and one hydroxyl of a dihydroxyl end-capping group after the exothermic reaction has cooled slightly; and
c) adding immediately thereafter said dihydroxyl end-capping group.

3. The process for preparing a polyarylimidazolidine of claim 2 further comprising the step of treating the product from step c with a mineral acid to convert an imino group to a carbonyl group.

4. The polymer composition of claim 1, the polyarylimidazolidine comprising 3 to 10 arylimidazolidine repeating units.

5. The polymer composition of claim 1 the polyarylsulfide comprising 3 to 5 biphenylsulfide repeating units.

## Patentansprüche

1. Stabile, schmelzverarbeitbare Polymerzusammensetzung, welche eine Verbindung mit labiler Wasserstoff-Funktionalität und eine Verbindung mit Isocyanat-Funktionalität enthält, in welcher die labile Wasserstoff-Verbindung und die Isocyanat-Verbindung durch eine thermisch reversible Isocyanat-labiler Wasserstoff-Bindung verknüpft sind, die die Eigenschaft aufweist, daß sie als Schmelze in die labile Wasserstoff-Verbindung und die Isocyanat-Verbindung dissoziiert, und worin die labile Wasserstoff- oder die Isocyanat-Verbindung enthält ein Polyarylsulfid mit Ausnahme von Polyphenylensulfid mit phenolischen Hydroxyl-Endgruppen oder ein Polyarylimidazolidin mit phenolischen Hydroxyl-Endgruppen, wobei es sich bei dem Polyarylsulfid um Biphenylensulfid oder ein Polyarylsulfid handelt, in welchem die Arylgruppe durch Anthracen oder Anthrachinon dargestellt wird, oder irgendwelche andere C₆ - C₁₄-Gruppen mit Flüssigkristall-Charakter, phenolischen Hydroxyl-Endgruppen und einem Polymerisationsgrad von 1 bis 20; es sich beim Polyarylimidazolidin handelt um: 4-Imino-1,3-imidazolidin-2,5-dion-1,3-diyl, 5-Imino-1,3-imidazolidin-2,4-dion-1,3-diyl, 1,3-Imidazolidin-2,4,5-trion-1,3-diyl oder Mischungen davon mit dem Polyarylimidazolidin mit phenolischen Hydroxyl-Endgruppen und einem Polymerisationsgrad von 1 bis 20.

2. Verfahren zur Herstellung eines Polyarylimidazolidins mit Hydroxyl-End-Abschlußgruppen und einem Polymerisationsgrad von 1 bis 20, umfassend:
a) Mischen eines Überschusses an Cyanwasserstoff mit einem Aryldiisocyanat und einem Katalysator in einem nicht-wässrigen Lösungsmittel, um eine exotherme Reaktion zu liefem;
b) Zugabe einer stöchiometrischen Menge des Aryldiisocyanats, um mit dem überschüssigen Cyanwasserstoff und einem Hydroxyl einer Dihydroxyl-End-Abschlußgruppe zu reagieren, nachdem sich die exotherme Reaktion leicht abgekühlt hat; und
c) unmittelbare Zugabe danach der Hydroxyl End-Abschlußgruppe.

3. Verfahren zur Herstellung eines Polyarylimidazolidins nach Anspruch 2, weiter umfassend die Stufe der Behandlung des Produkts aus Stufe c mit einer Mineralsäure, um eine Iminogruppe in eine Carbonylgruppe umzuwandeln.

4. Polymerzusammensetzung nach Anspruch 1, wobei das Polyarylimidazolidin 3 bis 10 wiederkehrende Arylimidazolidin-Einheiten umfaßt.

5. Polymerzusammensetzung nach Anspruch 1, wobei das Polyarylsulfid 3 bis 5 wiederkehrende Biphenylsulfid-Einheiten umfaßt.

## Revendications

1. Composition de polymères stable pouvant être traitée par fusion, comportant un composé présentant une fonctionnalité d'hydrogène labile et un composé présentant une fonctionnalité d'isocyanate, dans laquelle ledit composé d'hydrogène labile et ledit composé d'isocyanate sont liés par une liaison thermiquement réversible d'isocyanate/hydrogène labile qui, à l'état de fusion, possède la caractéristique de se dissocier dans ledit composé d'hydrogène labile et ledit composé d'isocyanate et dans laquelle ledit hydrogène labile ou ledit composé d'isocyanate comporte un sulfure de polyaryle, à l'exception du sulfure de polyphényle présentant des groupes terminaux d'hydroxyle phénoliques, ou une polyarylimidazolidine présentant des groupes terminaux d'hydroxyle phénoliques, dans lesquels ledit sulfure de polyaryle étant un sulfure de biphénylène ou un sulfure de polyaryle dans lequel le groupe d'aryle est représenté par de l'anthracène ou de l'anthraquinone, ou tous autres groupes C₆ à C₁₄ présentant le caractère d'un cristal liquide, des groupes terminaux d'hydroxyle phénoliques, et un degré de polymérisation de 1 à 20; ladite polyarylimidazolidine est : 4-imino-1,3-imidazolidine-2,5-dione-1,3diyle, 5-imino-1,3-imidazolidine-2,4-dione-1,3-diyle, 1,3-imidazolidine-2,4,5-trione-1,3-diyle, ou un mélange de ceux-ci avec ladite polyarylimidazolidine présentant des groupes terminaux d'hydroxyle phénoliques et un degré de polymérisation de 1 à 20.

2. Procédé pour la préparation d'une polyarylimidazolidine présentant des groupes terminaux finaux d'hydroxyle et un degré de polymérisation de 1 à 20, comportant :
a) mélanger un excédent de cyanure d'hydrogène avec un diisocyanate d'aryle et un catalyseur dans un solvant non-aqueux pour réaliser une réaction exothermique;
b) ajouter une quantité stoechiométrique dudit diisocyanate d'aryle pour réagir avec ledit excédent de cyanure d'hydrogène et un groupe terminal final d'hydroxyle après que la réaction exothermique s'est légèrement refroidie; et
c) ajouter immédiatement après ledit groupe terminal final d'hydroxyle.

3. Procédé pour la préparation d'une polyarylimidazolidine selon la revendication 2, comportant par ailleurs l'étape de traiter le produit de l'étape c avec un acide minéral pour convertir un groupe imino en groupe carbonyle.

4. Composition de polymères selon la revendication 1, la polyarylimidazolidine comportant 3 à 10 unités répétitives d'arylimidazolidine.

5. Composition de polymères selon la revendication 1, le sulfure de polyaryle comportant 3 à 5 unités répétitives de sulfure de biphényle.
